(19) Europäisches Patentamt
European Patent Office
Office européen des brevets

(11) **EP 3 335 425 B1**

(12) **EUROPEAN PATENT SPECIFICATION**

(45) Date of publication and mention
of the grant of the patent:
**03.04.2024 Bulletin 2024/14**

(21) Application number: **16703089.9**

(22) Date of filing: **01.02.2016**

(51) International Patent Classification (IPC):
**H04N 19/94** *(2014.01)*    **H04N 19/176** *(2014.01)*
**H04N 19/107** *(2014.01)*    **H04N 19/146** *(2014.01)*
**G06T 9/00** *(2006.01)*

(52) Cooperative Patent Classification (CPC):
**H04N 19/176; H04N 19/94;** H04N 19/107;
H04N 19/146

(86) International application number:
**PCT/EP2016/052071**

(87) International publication number:
**WO 2017/133753 (10.08.2017 Gazette 2017/32)**

(54) **VECTOR QUANTIZATION FOR VIDEO CODING USING CODEBOOK GENERATED BY SELECTED TRAINING SIGNALS**

VEKTORQUANTISIERUNG ZUR VIDEOCODIERUNG UNTER VERWENDUNG EINES DURCH AUSGEWÄHLTE TRAININGSSIGNALE ERZEUGTEN CODEBUCHS

QUANTIFICATION VECTORIELLE POUR CODAGE VIDÉO UTILISANT UN LIVRE DE CODES GÉNÉRÉ PAR DES SIGNAUX DE FORMATION SÉLECTIONNÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.06.2018 Bulletin 2018/25**

(73) Proprietors:
• **Huawei Technologies Co., Ltd.**
**Longgang District**
**Shenzhen, Guangdong 518129 (CN)**
• **Gottfried Wilhelm Leibniz Universität Hannover**
**30167 Hannover (DE)**

(72) Inventors:
• **ZHAO, Zhijie**
**80992 Munich (DE)**
• **JIANTONG, Zhou**
**80992 Munich (DE)**
• **LIU, Yiqun**
**30167 Hannover (DE)**
• **OSTERMANN, Joern**
**30167 Hannover (DE)**

(74) Representative: **Roth, Sebastian et al**
**Mitscherlich PartmbB**
**Patent- und Rechtsanwälte**
**Karlstraße 7**
**80333 München (DE)**

(56) References cited:
**EP-A2- 0 679 033    US-A- 5 457 495**

• **Bihong Huang: "Second-order prediction and residue vector quantization for video compression", Thèse pour le grade de docteur, 8 July 2015 (2015-07-08), XP055311381, Retrieved from the Internet: URL:http://www.theses.fr/2015REN1S026.pdf [retrieved on 2016-10-17]**
• **D. WANG ET AL: "Codebook adaptation algorithm for a scene adaptive video coder", 1995 IEEE INTERNATIONAL CONFERENCE ON ACOUSTICS, SPEECH AND SIGNAL PROCESSING (ICASSP), vol. 4, 1 January 1995 (1995-01-01), pages 2591-2594, XP055310420, Piscataway, NJ, US ISSN: 1520-6149, DOI: 10.1109/ICASSP.1995.480079**

**Description**

TECHNICAL FIELD

The present invention generally relates to the field of video processing, and specifically relates to video coding and decoding as well as video transmission systems. The present invention relates further to an encoder and a method for obtaining training signals configured to train a codebook for vector quantization, to a decoder and a method for obtaining training signals configured to train a codebook for inverse vector quantization, and to the generation of a codebook on the basis of the obtained training signals. Finally, the present invention relates to a computer program having a program code for performing such a method.

BACKGROUND

The international video coding standards developed by ISO and ITU are hybrid coding, which comprise transform, scalar quantization, transform skipping, motion compensated prediction, motion estimation, entropy coding, deblocking filter, sample adaptive offset. For a video sequence, each frame is split into block-shaped regions. The first frame of a video sequence is coded using intra prediction only. For all other frames of a sequence or between random access points, inter frame prediction coding modes are normally used for most blocks.

Transform coding and scalar quantization are elements of hybrid video coding system. They are used in the High Efficiency Video Coding (HEVC) standard as well as in all the predecessors from H.261, MPEG-1 to AVC/H.264. Core matrices of different sizes using inverse discrete cosine transform (IDCT) are specified for motion-compensated video compression while an alternative discrete sine transform (DST) is provided for coding 4x4 intra blocks in HEVC, in order to improve the compression performance. In HEVC, transform skipping is introduced to bypass transform for certain coding blocks.

Normally, the residual data of intra- or inter-frame prediction, which is the prediction error or difference between the original frame or block and its prediction, is spatially transformed. The transform coefficients of the residual are scaled and independently quantized, which is also described as scalar quantization (SQ). It occupies the majority of bit rate in the bit stream. With the change of the quantization parameter (QP) from 36 to 20, the percentage of bits for transform and quantization varies from 60% to 90%.

Vector quantization (VQ) is a powerful data compression scheme, see e.g. A. Gersho and R. M. Gray, "Vector quantization and signal compression", Kluwer Adademic Publishers, Apr. 1992. It is superior to scalar quantization in bit rate reduction, as VQ quantizes groups of data together instead of one at a time and maps pixel intensity vectors into binary vectors indexing a limited number of possible reproductions.

The document of M. Wagner and D. Saupe, "Video coding with quad-trees and adaptive vector quantization", 10th European in Signal Processing Conference, 2000, proposes an encoding scheme without motion estimation. The approach is based on adaptive vector quantization with a fixed codebook in the wavelet domain and a quad-tree structure.

The document of B. H. Huang, F. Henry, C. Guillemot and P. Salembier, "Mode Dependent Vector Quantization with a rate-distortion optimized codebook for residue coding in video compression", in IEEE International Conference on Acoustics, Speech and Signal Processing (ICASSP), Apr. 2015, introduces VQ in HEVC as a second-order prediction method to further reduce the remaining correlation in the residual of intra prediction known from HEVC.

The document of J. M. Valin and T. B. Timothy, "Perceptual vector quantization for video coding", in Proc. SPIE 9410-09, Sep. 2015, proposes perceptual vector quantization and contrast masking to apply the energy conservation principles to video coding for preserving textures. The DC component after DCT is separately scalar quantized while the AC components are coded using the codebook known from the document of Fischer, T.R, "A pyramid vector quantizer", IEEE Trans. On Information Theory 32, pp. 568-586, 1986. The codebook is dependent on the AC-component of the current block.

The document of M. Narroschke, "Extending the prediction error coder of H.264/AVC by a vector quantizer", in Proc. SPIE 5960, Visual Communications and Image Processing, 2005, proposes to extend the prediction error coder of H.264/AVC by using a vector quantizer. The used codebook is fixed.

In US 20140355672 A1, a four-path tree structured VQ is proposed. A dynamic four-path tree structured VQ is used instead of conventional two-path tree structured VQ. The proposed structure has the effect of a quicker codebook search.

In US 5859932 A, a least distortion vector determining finds the representative vector having least square error in the codebook with respect to an input vector. The difference vector between the representative vector and the input vector is issued together with the index data of the representative vector. A codebook update is made based on the difference vector, so that the representative vector may be closer to the input vector by using the difference vector.

Nevertheless, even if the state of the art proposes a video processing using a vector quantization based upon a codebook, the accuracy of the codebook is limited such that also the quality of the vector quantization is limited.

Bihong Huang: "Second-order prediction and residue vector quantization for video compression" (Thèse pour le grade de docteur, 8 July 2015, XP055311381) discloses a method of Mode Dependent Vector Quantization (MDVQ) for coding an intra prediction residue with mode dependent codebooks.

D. WANGET AL: "Codebook adaptation algorithm for a scene adaptive video coder" (1995 IEEE INTERNATIONAL CONFERENCE ON ACOUSTICS, SPEECH AND SIGNAL PROCESSING (ICASSP), vol. 4, 1 January 1995, pages 2591-2594, XP055310420) discloses a codebook adaptation algorithm for very low bit rate, real-time video coding.

US 5457495 A discloses a method of coding a video signal at a fixed bit rate with use of a vector quantization codebook, wherein advantageous codebook updates are determined by comparing a coding error associated with a first provisional coding of a frame with a coding error associated with a second provisional coding of the frame.

SUMMARY

Having recognized the above-mentioned disadvantages and problems, the present invention aims to improve the state of the art. In particular, the object of the present invention is to improve the quality of the vector quantization used in video processing, and to correspondingly improve the vector quantization used in a video encoder and a video decoder.

While the codebook may be generated and trained using training signals, the present invention particularly intends to obtain training signals that adaptively improve the quality of the codebook. The invention also intends to improve the vector quantization by providing training signals so as to obtain a scene-adaptive codebook, i.e. a codebook adaptively generated for the video sequence and even adaptively generated for a detected scene of the video sequence.

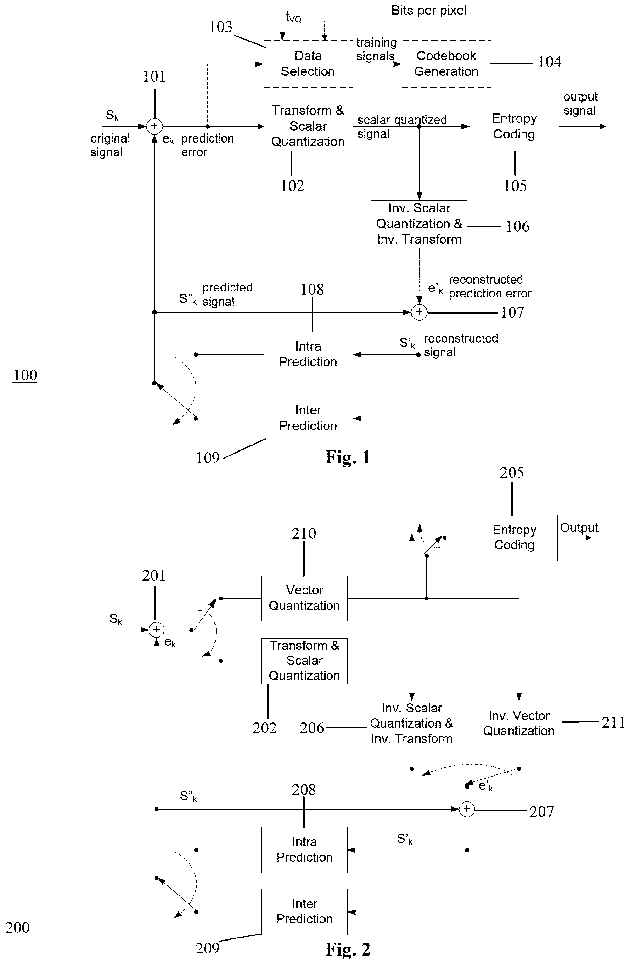

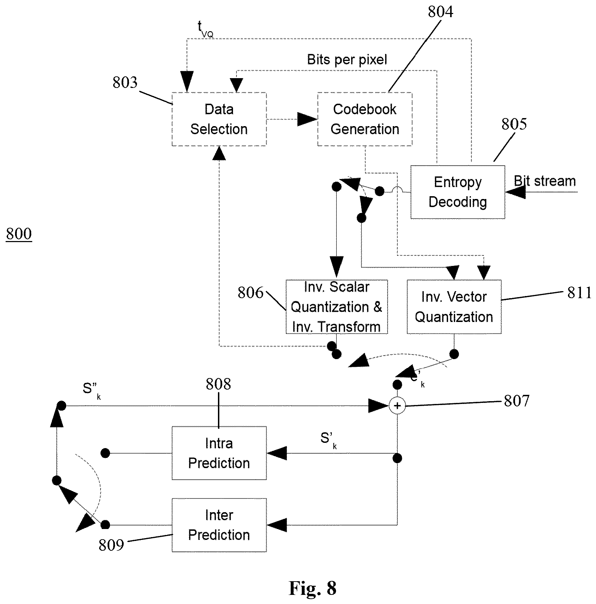

The above-mentioned object of the present invention is achieved by the solution provided in the enclosed independent claims. Advantageous implementations of the present invention are further defined in the respective dependent claims. Enabling disclosure for the protected invention is provided with the embodiments described in relation to figure 1 (for encoding) and figure 8 (for decoding). In the following, parts of the description and drawings referring to embodiments not covered by the claims, are not part of the invention, but are illustrative examples necessary for understanding the invention.

A first aspect of the present invention provides an encoder for obtaining training signals configured to train a codebook for vector quantization of a video sequence of subsequent frames, each frame being subdivided into coding blocks. The encoder comprises a scalar quantization unit configured to obtain, for each coding block of one or more training frames of the video sequence, a scalar quantized signal from a prediction error. The encoder comprises an entropy coding unit configured to entropy code, for each coding block of each training frame of the video sequence, the scalar quantized signal into an output signal. The encoder comprises a data selection unit configured to select, from among the training frames of the video sequence, one or several coding blocks of the training frames depending on a cost function of their respective output signal, and to obtain, for each selected coding block, a training signal derived from the prediction error of the selected coding block and configured to train the codebook for vector quantization of the video sequence. Thereby, a scene-adaptive codebook may be obtained, thus improving the vector quantization.

Particularly, the encoder is an encoder for encoding the video sequence in encoded signals, and specifically an encoder for encoding an original signal of the coding block in an encoded signal.

Particularly, the scalar quantization unit may be configured to obtain, for each coding block of the training frames, the scalar quantized signal by scalar quantizing the prediction error.

Alternatively, the scalar quantization unit may be a transform and scalar quantization unit configured to obtain, for each coding block of the training frames, the scalar quantized signal by transforming and scalar quantizing the prediction error. Transforming the prediction error before the scalar quantization is optional. The scalar quantization unit in fact may be configured to perform either a transform plus scalar quantization or a transform skip plus scalar quantization. In other words, the scalar quantization unit may either perform a transform and a scalar quantization or only a scalar quantization.

Particularly, the encoder may comprise a prediction unit configured to generate, for each coding block of the training frames, a predicted signal $S''_k$ for an original signal $S_k$ of the coding block. Particularly, the prediction error $e_k$ is a difference between the original signal $S_k$ and the predicted signal $S''_k$.

In an implementation form of the encoder according to the first aspect, the cost function of the output signal is a number of bits per pixel of the output signal or a rate distortion function of the output signal. The data selection unit is configured to select the coding blocks for which the respective output signal has a cost function above a threshold $t_{VQ}$. Thereby, the codebook can be optimized by excluding irrelevant prediction errors.

Particularly, the cost function of the output signal is a number of bits per pixel of the output signal or a rate distortion function of the output signal.

Particularly, and independently of the cost function being the number of bits per pixel or the rate distortion function, the data selection unit is configured to select the coding blocks for which the respective output signal has a cost function above a threshold tVQ.

According to the claimed invention, the encoder is an encoder for encoding the video sequence in encoded signals, the encoder being configured to add the threshold $t_{VQ}$ in the encoded signals as side information. Thereby, it is possible for a decoder receiving the side information to obtain itself the training signals and, possibly, to generate itself the codebook, so that it is not necessary to transmit information regarding the codebook via side information.

In a further implementation form of the encoder according to the first aspect, the training signal is the prediction error $e_k$ of the selected coding block. Thereby, useful training signals allowing excluding irrelevant coding blocks may be obtained.

In a further implementation form of the encoder according to the first aspect, the encoder comprises an inverse scalar quantization unit configured to obtain, for each coding block of each training frame of the video sequence, a reconstructed prediction error $e'_k$ from the scalar quantized signal. The training signal is the reconstructed prediction error $e'_k$ of the selected coding block. Thereby, since this reconstructed prediction error is also available on the decoder side, it is possible for a decoder to obtain itself the training signals and, possibly, to generate itself the codebook, so that the codebook generation may be accelerated. In this case the codebook does not need to be transmitted from the encoder to the decoder, thereby reducing the signalling and bandwidth usage.

Particularly, the inverse scalar quantization unit may be configured to obtain, for each coding block of the training frames, the reconstructed prediction error $e'_k$ by inverse scalar quantizing the scalar quantized signal.

Alternatively, the inverse scalar quantization unit may be an inverse scalar quantization and inverse transform unit configured to obtain, for each coding block of the training frames, the reconstructed prediction error $e'_k$ by inverse scalar quantizing and inverse transforming the scalar quantized signal.

Performing inverse transforming after the inverse scalar quantization is optional. The inverse scalar quantization unit in fact may be configured to perform either an inverse scalar quantization and inverse transform or only an inverse scalar quantization.

The scalar quantization unit and the inverse scalar quantization unit are linked in that according to a first alternative they both perform only a scalar quantization and, respectively, an inverse scalar quantization. According to a second alternative they both perform a combined transform and scalar quantization and, respectively, a combined inverse scalar quantization and inverse transform.

In a further implementation form of the encoder according to the first aspect, the encoder further comprises an intra prediction unit configured to generate a predicted signal $S''_k$ for an original signal as an intra predicted signal according to an intra-prediction mode, an intra prediction error $e_k$ being a difference between the original signal $S_k$ and the intra predicted signal $S''_k$. The encoder further comprises an inter prediction unit configured to generate the predicted signal $S''_k$ for the original signal as an inter predicted signal according to an inter-prediction mode, an inter prediction error $e_k$ being a difference between the original signal $S_k$ and the inter predicted signal $S''_k$. The data selection unit is configured to obtain, for each selected coding block, a first training signal derived from the intra prediction error of the selected coding block and a second training signal derived from the inter prediction error of the selected coding block, said first and second training signals being configured to train a first and a second codebook for vector quantization of the video sequence according to respectively an intra-prediction mode and an inter-prediction mode. Thereby, it is possible to obtain distinct training signals for two codebooks for respectively inter and intra prediction mode.

In a further implementation form of the encoder according to the first aspect, the encoder comprises a scene change detector configured to detect a change of scene in the video sequence. The data selection unit is configured to obtain scene-adaptive training signals after a detected change of scene. Thereby, it is possible to obtain new training signals at each scene change, so as to obtain improved and scene-dependent codebooks.

In a further implementation form of the encoder according to the first aspect, the training frame is the first frame after a detected change of scene that is coded with both intra-prediction mode and inter-prediction mode. This is advantageous in that the training signals may be obtained from only one frame and the delay or processing time for obtaining the training signals may be reduced.

In a further implementation form of the encoder according to the first aspect, the encoder is an encoder for encoding an original signal $S_k$ in an encoded signal. The encoder comprises a vector quantization unit configured to vector quantize, according to the trained codebook, the prediction error $e_k$ of a given coding block of a frame to be encoded into a vector quantized signal. The entropy coding unit is configured to entropy code, for said given coding block, the scalar quantized signal obtained by the scalar quantization unit and the vector quantized signal obtained by the vector quantization unit so as to obtain a respective scalar quantized output signal and vector quantized output signal, and to select as encoded signal of the given coding block the scalar quantized output signal or the vector quantized output signal depending on their respective cost function. Thereby, the quantized output signal may be optimized with respect to a given cost function.

The frame to be encoded is a frame of the video sequence. Particularly, the frame to be encoded may be one of the training frames or another frame of the video sequence.

In a further implementation form of the encoder according to the first aspect, the encoder comprises a codebook generation unit configured to train the codebook on the basis of the obtained training signals. Thereby, the encoder may generate the codebook itself after having obtained the training signals, so that it is not necessary to transmit information regarding the codebook via side information.

A second aspect of the present invention provides a device for generating a codebook for vector quantization of a video sequence of subsequent frames and/or for inverse vector quantization of a bit stream of an encoded video sequence of subsequent frames. The device comprises a codebook generation unit configured to train the codebook on the basis of the training signals obtained by the encoder according to any of the preceding claims. Thus, the generation of the codebook may be carried out outside of the encoder, which is e.g. advantageous if the encoder is located on a mobile handheld unit with restricted battery and computing capacities compared to a device located e.g. in a cloud.

A third aspect of the present invention provides a decoder for obtaining training signals configured to train a codebook for inverse vector quantization of a bit stream of an encoded video sequence of subsequent frames, each frame being subdivided into coding blocks. The decoder comprises an obtaining unit configured to obtain, from the bit stream, an encoded signal for each coding block of one or several training frames of the video sequence. The decoder comprises an entropy decoding unit configured to entropy decode, for each coding block of each training frame, the encoded signal into a scalar quantized signal. The decoder comprises an inverse scalar quantization unit configured to obtain, for each coding block of each training frame, a reconstructed prediction error $e'_k$ from the scalar quantized signal. The decoder comprises a data selection unit configured to select, from among the training frames of the video sequence, one or several coding blocks of the training frames depending on a cost function of their respective encoded signal, and to obtain, for each selected coding block, a training signal being the reconstructed prediction error $e'_k$ of the selected coding block and configured to train the codebook for inverse vector quantization of the bit stream. Thereby, the vector quantization and the overall encoding/decoding process may be improved.

According to the claimed invention, the obtaining unit is configured to obtain, from the bit stream, a threshold value $t_{VQ}$. The cost function is a number of bits per pixel of the encoded signal or a rate distortion function of the encoded signal. The data selection unit is configured to select the coding blocks for which the cost function of the respective encoded signal is above the threshold value $t_{VQ}$. Thereby, it is possible for the decoder to obtain the training signals, so that it is not necessary to transmit information regarding the codebook via side information. Particularly, the cost function is a number of bits per pixel of the encoded signal or a rate distortion function of the encoded signal.

Particularly, and independently of the cost function being the number of bits per pixel or the rate distortion function, the obtaining unit is configured to obtain, from the bit stream, a threshold value $t_{VQ}$ and the data selection unit is configured to select the coding blocks for which the cost function of the respective encoded signal is above the threshold value $t_{VQ}$.

A fourth aspect of the present invention provides a method for obtaining training signals configured to train a codebook for vector quantization of a video sequence of subsequent frames, each frame being subdivided into coding blocks. The method comprises obtaining, for each coding block of one or more training frames of the video sequence, a scalar quantized signal from a prediction error $e_k$. The method comprises entropy coding, for each coding block of each training frame of the video sequence, the scalar quantized signal into an output signal. The method comprises selecting, from among the training frames of the video sequence, one or several coding blocks of the training frames depending on a cost function of their respective output signal. The method comprises obtaining, for each selected coding block, a training signal derived from the prediction error $e_k$ of the selected coding block and configured to train the codebook for vector quantization of the video sequence.

Particularly, the method for obtaining the training signals according to the fourth aspect of the invention is part of an encoding method for encoding the video sequence in encoded signals, and specifically is part of an encoding method for encoding an original signal of the coding block in an encoded signal.

A fifth aspect of the present invention provides a method for obtaining training signals configured to train a codebook for inverse vector quantization of a bit stream of an encoded video sequence of subsequent frames, each frame being subdivided into coding blocks. The method comprises obtaining, from the bit stream, an encoded signal for each coding block of one or several training frames of the video sequence. The method comprises entropy decoding, for each coding block of each training frame, the encoded signal into a scalar quantized signal. The method comprises obtaining, for each coding block of each training frame, a reconstructed prediction error $e'_k$ from the scalar quantized signal. The method comprises selecting, from among the training frames of the video sequence, one or several coding blocks of the training frames depending on a cost function of their respective encoded signal. The method comprises obtaining, for each selected coding block, a training signal being the reconstructed prediction error $e'_k$ of the selected coding block and configured to train the codebook for inverse vector quantization of the bit stream.

Particularly, the method for obtaining the training signals according to the fifth aspect of the invention is part of a decoding method for decoding the bit stream of the video sequence, and specifically is part of a decoding method for decoding the encoded signal of each coding block of the video sequence.

A sixth aspect of the present invention provides a computer program having a program code for performing the method according to the fourth or the fifth aspect of the present invention, when the computer program runs on a computing device.

The functions of the encoder according to the first aspect, the functions of the device according to the second aspect, and the functions of the decoder according to the third aspect and any functions of any of their implementation forms may be performed by a processor or a computer, and any of their means may be implemented as software and/or hardware in such a processor or computer.

The methods according to the fourth or fifth aspects or any of their implementation forms may be performed by a processor or a computer.

The invention proposes content-based VQ for coding blocks as an additional quantization type on the hybrid video coding standard, such as HEVC. In contrast to known methods, the codebook generation is part of the encoding process. At the encoder side, prediction errors of intra or inter-coded blocks which match certain criteria are selected as the input data for intra or inter VQ codebook training. If VQ is selected for a coding block, it will bypass transform and scalar quantization. At the decoder side, if a block is coded by VQ, no inverse transform and inverse scalar quantization are needed. According to some embodiments, the decoder may also be required to generate the same codebook. According to some other embodiments, the codebook training may be done in the cloud. In this case, an encoder and a decoder may retrieve the trained codebook from the cloud if necessary.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be full formed by eternal entities not reflected in the description of a specific detailed element of that entity which performs that specific step or functionality, it should be clear for a skilled person that these methods and functionalities can be implemented in respective software or hardware elements, or any kind of combination thereof.

BRIEF DESCRIPTION OF DRAWINGS

The above aspects and implementation forms of the present invention will be explained in the following description of specific embodiments in relation to the enclosed drawings, in which

Fig. 1 shows an encoder according to a first embodiment of the present invention for obtaining training signals.

Fig. 2 shows an encoder according to the first embodiment of the present invention for generating an encoded signal.

Fig. 3 shows an encoder according to the first embodiment of the present invention for obtaining training signals and generating an encoded signal.

Fig. 4 shows a decoder according to the first embodiment of the present invention.

Fig. 5 shows a selection of coding blocks of training frames according to the invention.

Fig. 6 shows an encoder according to a second and a third embodiment of the present invention for obtaining training signals.

Fig. 7 shows an encoder according to the second and a third embodiment of the present invention for obtaining training signals and generating an encoded signal.

Fig. 8 shows a decoder according to the third embodiment of the present invention.

Fig. 9 shows a system according to a fourth embodiment of the present invention.

Fig. 10 shows a system according to a fifth embodiment of the present invention.

Fig. 11 shows a comparison of a peak signal-to-noise ratio (PSNR) according to the present invention and according to the prior art.

Fig. 12 shows the quantization error improvement according to the present invention for different quantization parameters (QP).

Fig. 13 shows a quantization bits reduction per frame according to the present invention.

DETAILED DESCRIPTION OF EMBODIMENTS

Fig. 1 shows an encoder according to a first embodiment of the present invention for obtaining training signals, and particularly an encoder 100 for obtaining training signals configured to train a codebook for vector quantization of a video sequence of subsequent frames, each frame being subdivided into coding blocks.

The encoder 100 comprises a scalar quantization unit 102 configured to obtain, for each coding block of one or more training frames of the video sequence, a scalar quantized signal from a prediction error $e_k$. In other words, a scalar quantized signal is obtained for the original signal $S_k$ of each coding block of the training frames.

The encoder 100 comprises an entropy coding unit 105 configured to entropy code, for each coding block of each training frame of the video sequence, the scalar quantized signal into an output signal.

In the encoder 100, the training signal is the prediction error $e_k$ of the selected coding block.

The encoder 100 comprises a data selection unit 103 configured to select, from among the training frames of the video sequence, one or several coding blocks of the training frames depending on a cost function of their respective output signal, and to obtain, for each selected coding block, a training signal derived from the prediction error $e_k$ of the selected coding block and configured to train the codebook for vector quantization of the video sequence.

Particularly, the encoder is an encoder for encoding the video sequence in encoded signals, and specifically an encoder for encoding an original signal of the coding block in an encoded signal.

Particularly, the scalar quantization unit 102 may be configured to obtain, for each coding block of the training frames, the scalar quantized signal by scalar quantizing the prediction error $e_k$. Alternatively, the scalar quantization unit 102 may be a transform and scalar quantization unit 102 configured to obtain, for each coding block of the training frames, the scalar quantized signal by transforming and scalar quantizing the prediction error $e_k$.

Transforming the prediction error $e_k$ before the scalar quantization is optional. The scalar quantization unit 102 in fact may be configured to perform either a transform plus scalar quantization or a transform skip plus scalar quantization. In other words, the scalar quantization unit 102 may either perform a transform and a scalar quantization or only a scalar quantization.

Particularly, the encoder may comprise a prediction unit 108, 109 configured to generate, for each coding block of the training frames, a predicted signal $S''_k$ for an original signal $S_k$ of the coding block. Particularly, the prediction error $e_k$ is a difference between the original signal $S_k$ and the predicted signal $S''_k$, wherein the difference is obtained by unit 101.

Particularly, the encoder 100 comprises an inverse scalar quantization unit 106 configured to obtain, for each coding block of each training frame of the video sequence, a reconstructed prediction error $e'_k$ from the scalar quantized signal.

Particularly, the inverse scalar quantization unit 106 may be configured to obtain, for each coding block of the training frames, the reconstructed prediction error $e'_k$ by inverse scalar quantizing the scalar quantized signal. Alternatively, the inverse scalar quantization unit 106 may be an inverse scalar quantization and inverse transform unit 106 configured to obtain, for each coding block of the training frames, the reconstructed prediction error $e'_k$ by inverse scalar quantizing and inverse transforming the scalar quantized signal.

Performing inverse transforming after the inverse scalar quantization is optional. The inverse scalar quantization unit in fact may be configured to perform either an inverse scalar quantization and inverse transform or only an inverse scalar quantization.

The scalar quantization unit 102 and the inverse scalar quantization unit 106 are linked in that according to a first alternative they both perform only a scalar quantization and, respectively, an inverse scalar quantization. According to a second alternative they both perform a combined transform and scalar quantization and, respectively, a combined inverse scalar quantization and inverse transform.

Particularly, the prediction unit 108, 109 is configured to generate, for each coding block of the training frames, the predicted signal $S''_k$ from a reconstructed signal $S'_k$. The reconstructed signal $S'_k$ is obtained by combining the predicted signal $S''_k$ and the reconstructed prediction error $e'_k$ by means of unit 107.

Particularly, the prediction unit 108, 109 comprises an intra prediction unit 108 and an inter prediction unit 109. The intra prediction unit 108 is configured to generate the predicted signal $S''_k$ as an intra predicted signal according to an intra-prediction mode, an intra prediction error $e_k$ being a difference between the original signal $S_k$ and the intra predicted signal $S''_k$. The inter prediction unit 109 is configured to generate the predicted signal $S''_k$ as an inter predicted signal according to an inter-prediction mode, an inter prediction error $e_k$ being a difference between the original signal $S_k$ and the inter predicted signal $S''_k$.

The predicted signal $S''_k$ of a coding block may be obtained by the intra prediction unit 108 or the inter prediction unit 109.

The encoder 100 further comprises a codebook generation unit 104 configured to train the codebook on the basis of the obtained training signals.

Fig. 2 shows an encoder 200 according to the first embodiment of the present invention for generating the encoded signal for the original signal $S_k$ of a coding block.

While Fig. 1 shows obtaining the training signals and generating the codebook, Fig. 2 shows the coding procedure with vector quantization. In other words, Fig. 1 shows the initialization phase of vector quantization, and Fig. 2 shows the steady phase of vector quantization. On the one hand, the initialization phase makes use of training frames of the video sequence for obtaining the training signals. On the other hand, the steady phase of Fig. 2 relates to the encoding of the video sequence and thus each original signal $S_k$ of each coding block of each frame of the video sequence may be processed by the encoder 200 of Fig. 2 to generate a corresponding encoded signal, referred to as output in Fig. 2. The video sequence is then encoded into encoded signals comprising the encoded signal obtained for each block of each frame of the sequence.

The encoder 200 comprises similar units than in Fig. 1. In Fig. 2, the data selection unit 103 and the codebook generation unit 104 of Fig. 1 are not shown.

A further difference is that the encoder 200 for generating the encoded signal comprises a vector quantization unit 210 configured to vector quantize, according to the trained codebook, the prediction error $e_k$ of a given coding block of a frame to be encoded into a vector quantized signal.

The entropy coding unit 205 is configured to entropy code, for said given coding block, the scalar quantized signal obtained by the scalar quantization unit 202 and the vector quantized signal obtained by the vector quantization unit 210 so as to obtain a respective scalar quantized output signal and vector quantized output signal. The entropy coding unit 205 is further configured to select as encoded signal of the given coding block, which encoded signal corresponds to the output of Fig. 2, the scalar quantized output signal or the vector quantized output signal depending on their respective cost function.

The encoder 200 further comprises an inverse vector quantization unit 211 configured to obtain, for each coding block of each frame of the video sequence, a reconstructed prediction error $e'_k$ from the vector quantized signal. The inverse vector quantization unit 211 uses the codebook generated by the codebook generation unit 104 and performs the inverse operation of the vector quantization unit 210.

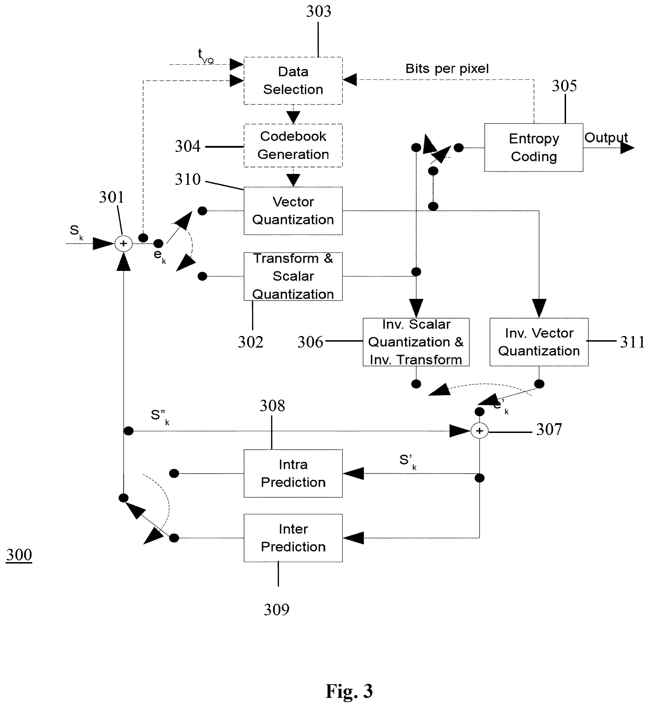

Fig. 3 shows an encoder 300 according to the first embodiment of the present invention for obtaining training signals and generating an encoded signal. The encoder 300 is correspondingly a combination of the encoders 100 and 200, and comprises the units of both encoders 100 and 200 and carries out the functions of both encoders 100 and 200.

The first embodiment proposes a hybrid video coding, and is compatible e.g. with HEVC. Each frame is divided into block-shaped regions or coding blocks. Preferably, the first frame of the video sequence is an intra frame and is coded only using intra prediction, which uses some prediction data within the same frame and has no dependence on other pictures. For all other frames of a sequence or between random access points, inter frame prediction coding modes or inter prediction is preferably used for most coding blocks.

After the completion of the prediction using the conventional intra- or inter-frame method based on the reconstructed signal, the prediction error $e_k = S_k - S''_k$ is scalar quantized. The vector quantization unit is set parallel to the scalar quantization unit, wherein the scalar quantization unit may be a transform and scalar quantization unit in which like in HEVC the transform coding may be skipped.

Therefore, the prediction errors may be quantized by either vectors in the codebook of vector quantization or by the scalar quantization after an optional transform coding. A decision for choosing the vector quantization or the scalar quantization is made based on a certain criteria, such as according to the Lagrangian rate distortion cost, which is the weighted sum of the squared errors and the bit rate.

Additional side information, such as the information about the chosen quantizer, which is either vector quantization or scalar quantization, is coded at the encoder so as to be transmitted to a decoder. In other words information about the choice, for a given coding block, of vector quantization or scalar quantization is also added in the encoded signals as side information.

In the first embodiment, also the codebook generated by the codebook generation unit 104, 304, is transmitted to a decoder as side information in or together with the encoded signals. Further side information comprises an index information defining the vector of the codebook that has been used for vector quantization.

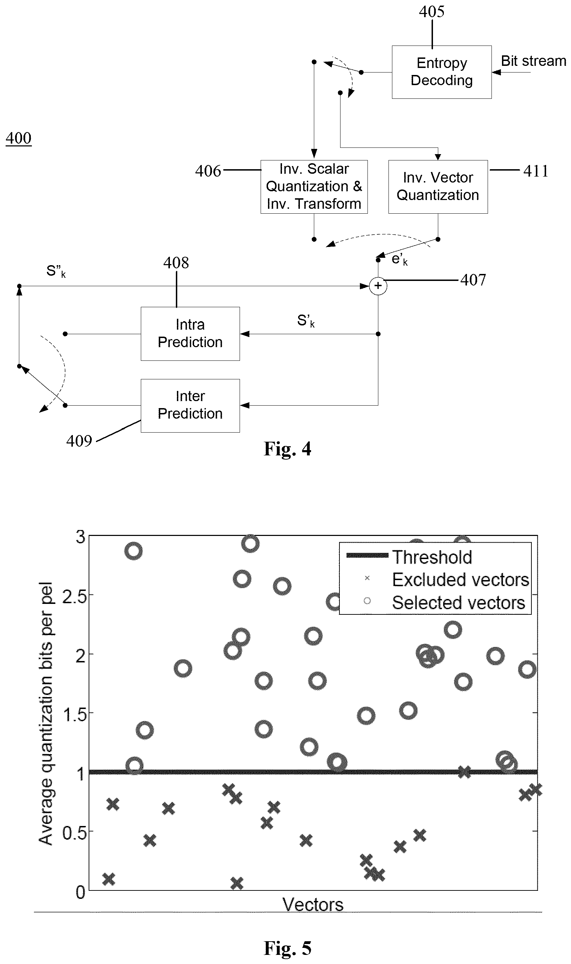

Fig. 4 shows a decoder according to the first embodiment of the present invention, and particularly a decoder 400 for decoding a bit stream of the encoded video sequence of subsequent frames previously encoded by the encoder according to the first embodiment. The decoder 400 is configured to decode the bit stream into decoded signals $S_{k,d}$, each decoded signals corresponding to a coding block. The decoded signals are then combined to obtain the frames of the video sequence.

The decoder 400 comprises an obtaining unit (not shown) configured to obtain, from the bit stream, an encoded signal for each coding block of each frame of the video sequence.

The decoder 400 comprises an entropy decoding unit 405 configured to entropy decode, for each coding block of each frame, the encoded signal into a quantized signal.

The obtaining unit is also configured to obtain additional side information from the bit stream. For example, the information about the choice, for a given coding block, of vector quantization or scalar quantization is obtained from the bit stream. Also, the codebook generated by the encoder according to the first embodiment is obtained from the bit stream, as well as the index information defining which vector of the codebook has to be used.

Based on the received additional side information regarding the codebook and regarding the quantization choice for a given coding block, the decoder 400 decodes the quantized signal obtained from the entropy decoding unit 405 into a reconstructed prediction error $e'_k$. In this respect, the decoder 400 comprise an inverse scalar quantization unit 406 and an inverse vector quantization unit 411 that are similar to the inverse scalar quantization unit and inverse vector quantization unit of the encoder according to the first embodiment. Also, similarly, the inverse scalar quantization unit 406 may consist in an inverse scalar quantization and inverse transform unit.

If, according to the side information, the quantized signal has been quantized by scalar quantization, then the quantized signal is processed by the inverse scalar quantization unit 406 to obtain a reconstructed prediction error $e'_k$. If, according to the side information, the quantized signal has been quantized by vector quantization, then the quantized signal is processed by the inverse vector quantization unit 411 to obtain the reconstructed prediction error $e'_k$, wherein the inverse vector quantization unit 411 makes use of the codebook and of the index information obtained from the bit stream.

The decoder 400 further comprises intra prediction and inter prediction units 408, 409 similar to the encoder so as to obtain e.g. the reconstructed signal $S'_k$.

In the followings the selection, according to the invention, of coding blocks for obtaining the training signals configured to train the codebook will be illustrated together with Fig. 5.

Since HEVC has already achieved good coding efficiency, not all the coding blocks in the frames are coded with plenty of bits. For instance, skip mode does not code any residual, or prediction error, in the bit stream and in most cases the chosen merge candidate of this mode offers relative accurate prediction.

The invention now proposes to place the focus of vector quantization on certain coding blocks, for instance those whose bit cost is relative high. The quality of vector quantization depends heavily on the accuracy of the codebook. Proper data, i.e. proper training signals, should be chosen for the training of the codebook. Since vector quantization is only applied on the coding blocks with higher quantization cost, a predefined threshold such as the average bit cost per pixel is given to exclude irrelevant prediction errors. Alternatively, the rate distortion function can be used in order to exclude irrelevant prediction errors.

Fig. 5 roughly illustrates the selection of coding blocks, and the corresponding selection of prediction errors for the training of the vector quantization codebook. In the example of Fig. 5, the threshold of quantization bits is given to 1 bit per pixel. The symbol "o" represents selected prediction errors, and the symbol "x" represents excluded prediction errors. The representative centroids of vector quantization regions would be deviated if all the prediction errors symbolized with "x" are also included in the training, causing the quantization to be inaccurate.

In order to select the proper prediction errors as the input for codebook training, an analysis of the quantization bits is accomplished before the generation and the application of VQ codebook, since the most probable gain may lie in the areas where VQ requires fewer bits than conventional quantization technique. Only the prediction errors in these areas will be selected for the training in order to generate an appropriate codebook.

Generally the first frame or the first several frames of a scene within the video sequence will be used for training, i.e. will be used as training frames. The vector quantization codebook is created on selected prediction errors, which can be acquired from coding procedure. The selection of prediction errors is based e.g. on the number of the bits per pel needed for standard transform and scalar quantization of coding blocks, such as coding units (CUs) or transform units (TUs) in HEVC. Such a CU is a basic coding structure of the video sequence of a pre-defined size, containing a part of a picture, wherein a CU can be partitioned into further CUs. The TU is a basic representative block having residual or transform coefficients for applying transform and quantization.

If the number of bits for a coding block, such as CU or TU in HEVC, exceeds a certain pre-defined threshold $t_{VQ}$, the prediction error of this coding block will be taken in the training data. In the vector quantization codebook training shown in Fig. 1, e.g. the first one (or several) frame(s) of a sequence or a scene will be used for training. During training, the intra and inter prediction errors of a coding block will be coded using conventional transform (or transform skipping) and scalar quantization.

The threshold $t_{VQ}$ may be chosen based on the average bits per pel for vector quantization. The threshold may be for instance defined based on the size of the codebook and the size of the coding block whose prediction errors are chosen to be quantized. As an example, if it is desired to quantize prediction errors of a coding block of dimensions NxN with a codebook having $2^m$ vectors of size NxN the threshold can be chosen as the average bits per pel (bpp) based on vector quantization, which is m/(NxN).

Based on pre-defined criteria, such as the size of codebook, the threshold to select prediction errors $t_{VQ}$, the codebook will be generated after coding the first or several frames of a sequence or a scene within a sequence. Furthermore, prediction errors may be separated into prediction errors originating from intra- and inter-prediction. The codebook for intra block is generated based intra prediction errors, and the codebook for inter block is generated based on inter prediction errors.

In an example, it is desired to quantize the prediction errors of an 8x8 coding block with a codebook containing

$2^{12}$ vectors of size 8x8 pixels. Suppose that the index of the selected vectors in the codebook is coded by fixed length coding, the average bits per pel (bpp) based on vector quantization is 12/64, which means that the threshold $t_{VQ}$ equals 3/16. The relevant prediction errors for training should be the prediction errors from the coding blocks where transform and scalar quantization costs more than 3/16 bpp.

There are different methods for codebook training. In a possible implementation, the Linde-Buzo-Gray (LBG) algorithm may be chosen for the training of the codebooks. This LBG algorithm is known e.g. from the document of Y. Linde, etc., "An algorithm for vector quantizer design," IEEE Transactions on Communications, Jan 1980.

In case a codebook is generated at the encoder and the codebook is transmitted from an encoder to a decoder according to the first embodiment or to the second embodiment described below, the codebook training method is not relevant to the decoder. In case the codebook is generated both at the encoder and decoder according to the third embodiment described below or in case the codebook is generated in a cloud according to the fourth and fifth embodiments described below, the codebook is not transmitted from an encoder to a decoder. In the latter cases, the codebook training method and related parameters, such as the threshold to select the proper prediction errors of one or several frames and their picture order count, the conditions to terminate codebook training, the size of the codebook and etc, need to be coded and transmitted from the encoder to the decoder for example as side information.

For the LBG algorithm, these parameters transferred from an encoder to a decoder may include such as the size of the codebook, the distortion metrics, the number of iteration and the condition for convergence.

A possible implementation relates to the vector quantization of the prediction errors in units of 4x4 block and rearranges the block into vectors of 16 dimensions. The number of vectors in the codebook is restricted to 4 with the intention of reducing the coding cost of codebooks and the code length of the indices. The indices of vectors could be coded with 2 bits by using fixed-length coding or even less. The blocks of interest here are those quantized with such as more than 2/16 bits per pixel.

An initial attempt uses 4x4 blocks for investigation, which shows that gain can be achieved if a codebook of 4 vectors with a dimension of 16 is provided. In general, vector quantization is aiming at all the block sizes defined by a video coding standard, such as up to 64x64 for a coding tree unit (CTU) in HEVC. For the blocks bigger than 4x4, appropriate methods such as cascade structure or transform may be used to improve the quality of the vector quantization codebook. Cascade structure is e.g. known from the document of Asif, A., Moura, J.M.F., "Image codec by noncausal prediction, residual mean removal, and cascaded VQ," in IEEE Transactions on Circuits and Systems for Video Technology, vol.6, no.1, pp.42-55, Feb 1996. The number of vectors in the vector quantization codebook is dependent on the block size and the target bit rate per pixel. Two different codebooks are generated for intra- and inter-prediction mode, since they have prediction errors with different characteristics.

Since the content of videos is different, a universally representative codebook is normally inefficient. Therefore the present invention proposes to compute scene-based codebooks. The prediction errors of the frames at the beginning of a scene will be used as the training data. To acquire the codebook for intra- and inter-prediction errors simultaneously, the first frame coded with both prediction modes can be exploited to generate the codebooks.

Prediction errors coded with lower quantization step size, i.e. higher coding quality, are much smaller than the prediction errors based on the reference frames of low quality. Hence, different codebooks can be created for each set of quantization parameters.

In order to limit complexity, only one codebook for each set of quantization parameter for I, P and B frames within a scene can be used. The indices of selected vectors are coded e.g. by using Huffman code or context adaptive binary arithmetic code or fixed length code or variable length code, in order to reduce the bit rate further for vector quantization.

After the codebook is generated, the encoding is performed e.g. by the encoder of Fig. 2 or 3 with the proposed vector quantization in parallel to transform and scalar quantization. The decision whether vector quantization or transform coding plus scalar quantization is taken for a certain block could be based on e.g. the Lagrangian cost d, given by following equation (1):

$$d = SSE + \lambda \cdot B \tag{1}$$

where SSE is the sum of the squared quantization error and B indicates the coding bit cost of either the index of the vector quantization (plus the cost of the parameters for generating the codebook at the decoder or in the cloud in case the codebook is not transmitted from the encoder to the decoder), or the cost of using scalar quantization for the block. $\lambda$ is a weight factor that can be derived e.g. based on the scalar quantization parameters and the type of frame. For example, A may be a weight derived by the multiplication of the quantization parameter factor (QPF) and a term based on quantization parameter of the current coding frame, dQP:

$$\lambda = QPF \cdot 2^{\frac{dQP-12}{3}} \tag{2}$$

where dQP equals the sum of quantization parameter (QP) and QP offset. QPF is available according to the simulation configuration and the type of frame. For the LD-P configuration in HM-16.4, the QPF is defined in Tab. 1 .

Tab.1. Quantization parameter factor

| Frame Type | POC | QP offset | QPF |
| --- | --- | --- | --- |
| I frame | 0 | 0 | 0.4845 |
| B frames | 1 | 3 | 0.4624 |
| | 2 | 2 | 0.4624 |
| | 3 | 3 | 0.4624 |
| | 4 | 1 | 0.5780 |

QP is used to determine the quantization step size ($\Delta$) in HEVC, see e.g. the document of M. Budagavi, etc., "Core transform design in the high efficiency video coding (HEVC) standard," IEEE Journal of Selected Topics in Signal Processing, vol. 7, no. 6, pp. 1029-1041, Dec 2013. The relationship between QP and the equivalent quantization step size is given by:

$$\Delta(QP) = 2^{\frac{QP-4}{6}} \tag{3}$$

The vector with the smallest squared quantization error in the codebook is chosen as the representative of the vector quantization. In case that the Lagrangian cost $d_{VQ}$ is smaller than the cost of transform coding and conventional scalar quantization $d_{SQ}$, vector quantization is chosen for the block. The decoder will find the vector from the codebook by using the coded index, i.e. the index information obtained as side information.

In a possible implementation, the vector with the smallest squared quantization error in the codebook is chosen as the representative of the vector quantization. In case that the Lagrangian cost $d_{VQ}$ is smaller than the cost of conventional scalar quantization $d_{SQ}$, vector quantization is chosen for the current block. The index of the selected vector and the codebook are transmitted from the encoder, such as shown in Fig. 1-3, to the decoder, such as shown in Fig. 4. Additional side information, such as the information about the chosen quantizer, which is either vector quantization or transform coding plus scalar quantization, is coded at encoder and transmitted to the decoder. Based on the received additional side information, a decoder, such as shown in Fig. 4, decodes a block by vector quantization or transform coding plus scalar quantization. In case a block is vector quantization coded, the decoder finds the vector from the received codebook by using the received index.

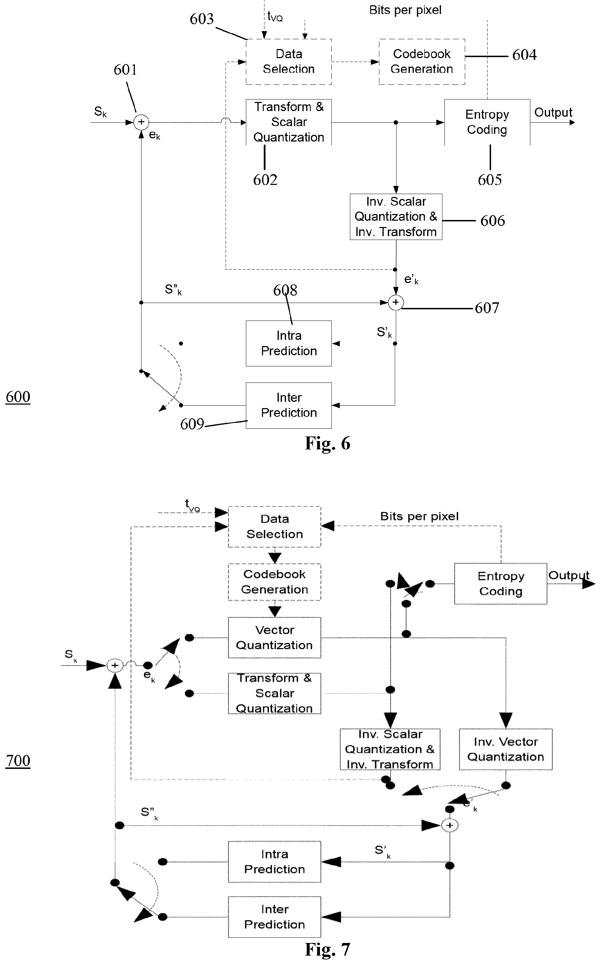

Fig. 6 shows an encoder 600 according to a second and a third embodiment of the present invention for obtaining training signals.

Fig. 7 shows an encoder 700 according to the second and a third embodiment of the present invention for obtaining training signals and generating an encoded signal.

The encoders 600 and 700 corresponds to the encoders of Fig. 1 and 3, with the difference that the training signal is the reconstructed prediction error $e'_k$ of the selected coding block, instead of being the prediction error $e_k$ in Fig. 1 and 3.

The second embodiment of the present invention relates to the encoder 600, 700, which uses the reconstructed prediction error $e'_k$ as training signal, as well as to the decoder 400 of Fig. 4. In this second embodiment, the generated codebook is transmitted from the encoder to the decoder as side information together with the encoded signals.

The third embodiment of the present invention relates to the encoder 600, 700, which uses the reconstructed prediction error $e'_k$ as training signal, as well as to the decoder 800 of Fig. 8. In this third embodiment, the generated codebook is not transmitted from the encoder to the decoder as side information. Rather, the decoder 800 generates itself the codebook, thus reducing the amount of side information.

Fig. 8 accordingly shows a decoder according to the third embodiment of the present invention, and particularly a decoder 800 for obtaining training signals configured to train a codebook for inverse vector quantization of a bit stream of an encoded video sequence of subsequent frames, each frame being subdivided into coding blocks.

The decoder 800 comprises an obtaining unit (not shown) configured to obtain, from the bit stream, an encoded signal for each coding block of one or several training frames of the video sequence.

The decoder 800 comprises an entropy decoding unit 805 configured to entropy decode, for each coding block of each training frame, the encoded signal into a scalar quantized signal.

The decoder 800 comprises an inverse scalar quantization unit 806 configured to obtain, for each coding block of each training frame, a reconstructed prediction error $e'_k$ from the scalar quantized signal.

The decoder 800 comprises a data selection unit 803 configured to select, from among the training frames of the video sequence, one or several coding blocks of the training frames depending on a cost function of their respective encoded signal, and to obtain, for each selected coding block, a training signal being the reconstructed prediction error $e'_k$ of the selected coding block and configured to train the codebook for inverse vector quantization of the bit stream.

Particularly, the cost function may be a number of bits per pixel of the encoded signal or a rate distortion function of the encoded signal.

Particularly, the obtaining unit is configured to obtain, from the bit stream, the threshold value $t_{VQ}$. The data selection unit 803 may be configured to select the coding blocks for which the cost function of the respective encoded signal is above the threshold value $t_{VQ}$.

The remaining structure of the decoder 800 corresponds to the decoder of Fig. 4.

In the third embodiment, the codebook is generated both at the encoder 600, 700 and at the decoder 800. Thus, it is not necessary to transmit the codebook from the encoder to the decoder. In order to make sure the identical codebook is generated both at the encoder and the decoder, the input data for codebook training should be the reconstructed prediction errors $e'_k$ instead of prediction errors $e_k$. Moreover, some additional parameters may be transmitted, as side information, from the encoder to the decoder besides the vector quantization or scalar quantization mode, which signals the chosen quantization method. The additional parameters include the threshold to select the proper prediction errors of one or several training frames and their picture order count, the conditions to terminate codebook training, the size of the codebook and etc. These parameters can be signalled through picture parameter set (PPS) and/or sequence parameter set (SPS) and/or other relevant parameter set. Also side information for identifying the training frames of the video sequence may be transmitted from the encoder to the decoder.

For the LBG algorithm, these parameters transferred from an encoder to a decoder may include such as the size of the codebook, the distortion metrics, the number of iteration and the condition for convergence. At the encoder as shown in Fig. 6 and 7, based on pre-defined criteria, such as the size of codebook, the threshold to select the reconstructed prediction errors $t_{VQ}$, codebook will be generated after coding the first or several frames of a sequence or a scene within a sequence. The size of codebook, the threshold to select the reconstructed prediction errors, the frames of which the reconstructed prediction errors are from, the conditions for codebook convergence and other related parameters are transmitted to the decoder. Furthermore, the reconstructed prediction errors are separated into intra and inter reconstructed prediction errors, respectively. The codebook for intra block is generated based on intra reconstructed prediction errors, and the codebook for inter block is generated based on inter reconstructed prediction errors.

At the decoder 800 shown in Fig. 8, based on the received side information, such as the coding mode information in PPS and/or SPS, the decoder may be informed that vector quantization is used for the current sequence or several frames. In case vector quantization is enabled, the codebook is generated based on the received side information, such as the size of codebook, the threshold to select the reconstructed prediction errors, the frames of which the reconstructed prediction errors are from, the conditions for codebook convergence and other related parameters. The codebook will be generated after decoding the first or several frames of a sequence or a scene within a sequence. The codebook for intra block is generated based intra reconstructed prediction errors, and the codebook for inter block is generated based on inter reconstructed prediction errors.

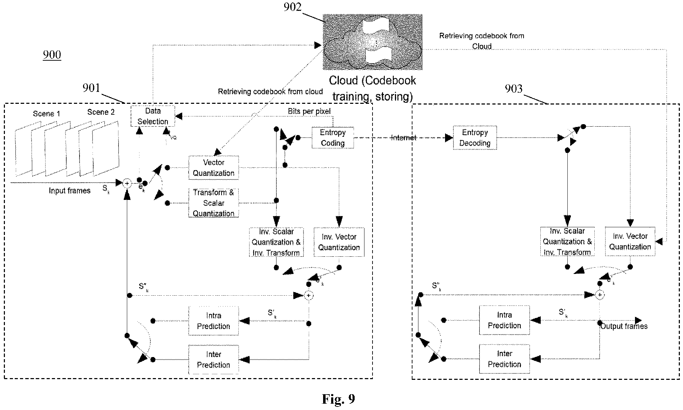

Fig. 9 shows a system 900 according to a fourth embodiment of the present invention. The system comprises an encoder 901, a decoder 903 and a cloud computing device 902. As shown in Fig. 9, vector quantization can be implemented by using cloud structure in order to alleviate the computation burden at the encoder and decoder. The encoder and decoder are combined with a communication module, which enables the communication between the cloud and the encoder/decoder.

In the fourth embodiment of Fig. 9, the encoder 901 sends the compressed or uncompressed training signals and related side information - like bit cost of intra/inter block when using scalar quantization - to the cloud 902 thus moving the codebook generation and optionally the data selection to the cloud. Before the codebook is generated, the encoder does not use vector quantization. Once the codebook creation is finished, the encoder and decoder are informed. A URL link in PPS/SPS or other parameter sets can be used to identify the location of the codebook for downloading. Then the encoder 901 can retrieve the codebook from the cloud 902 for encoding such that vector quantization can be considered as an alternative option besides transform coding and scalar quantization. At the decoder side 903, once the codebook is ready, the decoder can retrieve the codebook from the cloud 902 and decode a block based on the coding mode and other received side information. After the codebook is ready, the encoder and decoder may operate according to the encoder and decoder of the first embodiment respectively. A signaling mechanism in PPS and/or SPS and/or other parameter set can be used to transmit side information and inform the decoder 903 that vector quantization is used in the current sequence or several frames. The example structure shown in Figure 9 is an interesting solution for encoders or decoders being mobile devices with limited computing resource. This structure reduces the computation burden both for the encoder and decoder.

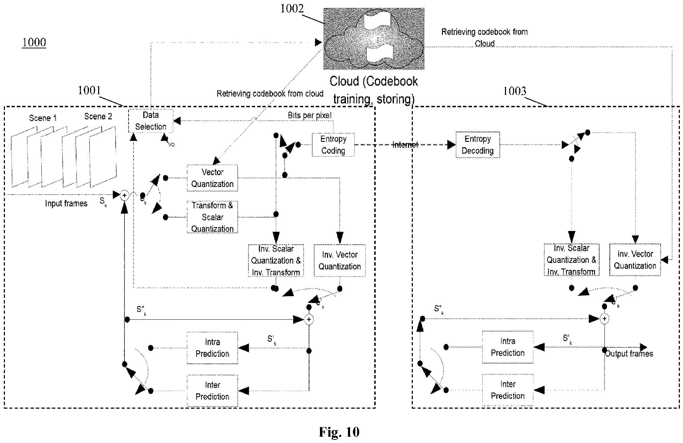

Fig. 10 shows a system 1000 according to a fifth embodiment of the present invention. The system 1000 comprises an encoder 1001, a decoder 1003 and a cloud computing device 1002. The system of the fifth embodiment differs from the system 900 according to the fourth embodiment in that the encoder 1001 uses the reconstructed prediction error $e'_k$ as training signal, while the encoder 901 uses the prediction error $e_k$ as training signal.

For all the embodiments shown above, a syntax or side information to indicate where the vector quantization is used may be given in PPS, and/or SPS, and/or coding block level and/or below coding block level. Syntax or side information could be defined to indicate the change of scene and the update of codebook in PPS, coding block level and/or below coding block level, if the VQ codebook is scene-dependent. The syntaxes or side information can be content adaptive binary arithmetic coding coded or fixed length coded.

In the followings, test results will be presented in combination with the example of already described above based on vector quantization in units of 4x4 block and rearrangement of the block into vectors of 16 dimensions, wherein the number of vectors in the codebook is restricted to 4. Given the selection criteria for blocks to be coded by vector quantization, a codebook with 4 vectors has the advantage of lower vector index cost compared to transform and scalar quantization. However, it pays the price of a higher SSE. Therefore, we expect most of the blocks choosing vector quantization to possess lower squared quantization error.

The simulation is based on the prediction errors during the encoding procedure of the HEVC reference software HM-16.4. We regard it as an open-loop simulation. The reconstructed frames that may include blocks coded with vector quantization are used for peak signal-to-noise ratio (PSNR) computation. As reference frames, we use the frames generated by the regular HEVC test model.

In order to judge the prospects of applying vector quantization to HEVC in our open-loop simulation, we use vector quantization only if the vector represents the prediction error with a higher quality than the transform plus scalar quantization. Hence, our open-loop reconstructed frames have always a better quality than the frames stored in the reference picture buffer.

The codebook of VQ is PCM coded and transmitted from the encoder to the decoder. 8 bits are provided for each element of the vectors in the codebook. Assuming the low-delay P configuration and a group of picture (GOP) size of 4, the codebook requires about 1 kbps in the bit stream if the codebook refreshes every second. The test set contains class C and F of JCT-VC test sequences with 4:2:0 sub-sampling. The former has a resolution of 832x480 (BasketballDrill, PartySence, BQMall and RaceHorses) while the latter contains BasketballDrive, Kimono, Cactus, ParkScene as well as BQTerrace with a resolution of 1920x1080.

We use HM-16.4 on these two groups of sequences as an anchor. All the simulations are based on the first 100 frames of the sequences with Low-Delay P configuration of JCT-VC common test conditions. QPs are set to be 20, 24, 28, 32 and 36 for each test sequence.

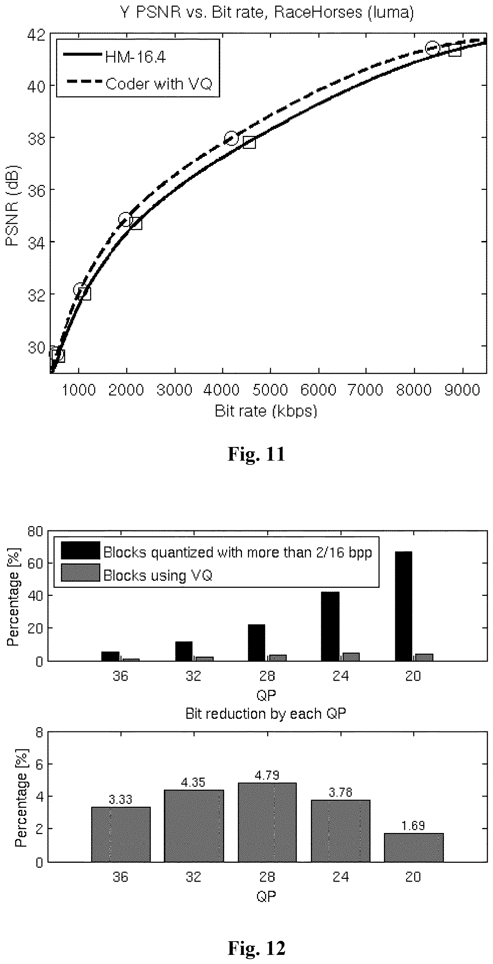

Fig. 11 shows a comparison of a peak signal-to-noise ratio (PSNR) according to the present invention and according to the prior art. The rate distortion curve of RaceHorses is shown in Fig. 11. The dashed curve connecting five circles is the result of the proposed encoder with vector quantization, while squares with solid line show the corresponding results from HM-16.4 with the same QPs. The five data points of each curve have QPs from 36 on the left to 20 on the right.

Fig. 12, which shows the quantization error improvement according to the present invention for different quantization parameters (QP), and specifically shows the influence of QP on bit rate for RaceHorses, provides an explanation. With the descend of QP, the step size of the scalar quantization becomes lower, which leads to higher bit rate. More blocks will exceed the predefined threshold of average bits per pixel (2/16), which is illustrated by the black columns in the first sub-figure of Fig. 12. The ratio rises from 5.46% for QP 36 to 66.56% for QP 24. On the other hand a lower QP results in a quality improvement of the reconstructed video. Simultaneously, the accuracy requirement on the quantizer is higher, which surpasses what 2-bit vector quantizer can offer. Thus the number of blocks, where VQ offers a lower SSE than transform and scalar quantizer, drops from 21% to 6%. As a result, the percentage of blocks using VQ in the video (grey column) has a convex curve with the descend of QP. Consequently the overall percentage of bit rate reduction reaches its maximum (4.79%) at the middle of chosen QPs at 28 for RaceHorses. All the other sequences in the test set show the similar tendency in terms of QP. The quality of reconstructed videos is about 0.02 dB higher than that of HM-16.4 on average.

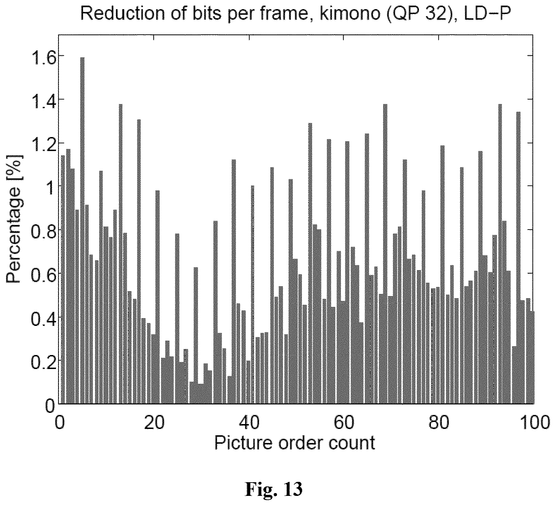

Fig. 13 shows a quantization bits reduction per frame according to the present invention. For a single simulation based on a certain given QP, the same codebooks are used for the entire sequence, although dQP for each frame may change according to QP offset. It is observed from Fig. 13 that the frames at picture order count (POC) equal multiples of 4, which are coded with lowest dQP, have more bit reduction. Hence, QP-based codebooks for the same sequence may further increase the coding gain of VQ. Although the coding cost of the signaling is not available, we can estimate it using similar syntaxes. The syntaxes for skip flag occupies around 2% in the coded bit stream in terms of BD-rate. Even if as many as bits are needed for the signaling of quantization type, the proposed method could still bring an average coding gain of around 2%.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Encoder for obtaining training signals configured to train a codebook for vector quantization of a video sequence of subsequent frames, each frame being subdivided into coding blocks, and for encoding the video sequence in encoded signals,

   the encoder comprising:

   - a scalar quantization unit (102) configured to obtain, for each coding block of one or more training frames of the video sequence, a scalar quantized signal from a prediction error ($e_k$),
   - an entropy coding unit (105) configured to entropy code, for each coding block of each training frame of the video sequence, the scalar quantized signal into an output signal,
   - a data selection unit (103) configured to select, from among the training frames of the video sequence, one or several coding blocks of the training frames depending on a cost function of their respective output signal, and to obtain, for each selected coding block, a training signal, wherein the training signal is either the prediction error ($e_k$) or a reconstructed prediction error ($e'_k$) of the selected coding block, and configured to train the codebook for vector quantization of the video sequence,

   wherein the cost function of the output signal is a number of bits per pixel of the output signal or a rate distortion function of the output signal; and
   the data selection unit (103) is configured to select the coding blocks for which the respective output signal has a cost function above a threshold ($t_{VQ}$), and
   wherein the encoder is configured to add the threshold ($t_{VQ}$) in the encoded signals as side information.

2. Encoder according to claim 1,
   wherein the training signal is the prediction error ($e_k$) of the selected coding block.

3. Encoder according to claim 1,

   the encoder comprising:

   - an inverse scalar quantization unit (606) configured to obtain, for each coding block of each training frame of the video sequence, the reconstructed prediction error ($e'_k$) from the scalar quantized signal,

   wherein the training signal is the reconstructed prediction error ($e'_k$) of the selected coding block.

4. Encoder according to any of the preceding claims,

   further comprising:

   - an intra prediction unit (108) configured to generate a predicted signal ($S''_k$) for an original signal ($S_k$) as an intra predicted signal according to an intra-prediction mode, an intra prediction error ($e_k$) being a difference between the original signal ($S_k$) and the intra predicted signal ($S''_k$), and
   - an inter prediction unit (109) configured to generate the predicted signal ($S''_k$) for the original signal as an inter predicted signal according to an inter-prediction mode, an inter prediction error ($e_k$) being a difference between the original signal ($S_k$) and the inter predicted signal ($S''_k$),

   wherein the data selection unit (103) is configured to obtain, for each selected coding block, a first training signal derived from the intra prediction error of the selected coding block and a second training signal derived from the inter prediction error of the selected coding block, said first and second training signals being configured to train a first and a second codebook for vector quantization of the video sequence according to respectively an intra-prediction mode and an inter-prediction mode.

5. Encoder according to any of the preceding claims,
   the encoder comprising:

   - a scene change detector configured to detect a change of scene in the video sequence, wherein the data selection unit (103) is configured to obtain scene-adaptive training signals after a detected change of scene.

6. Encoder according to claim 5, when depending on claim 4,
   wherein the training frame is the first frame after a detected change of scene that is coded with both intra-prediction mode and inter-prediction mode.

7. Encoder according to any of the preceding claims for encoding an original signal ($S_k$) in an encoded signal,

   the encoder comprising:

   - a vector quantization unit (210) configured to vector quantize, according to the trained codebook, the prediction error ($e_k$) of a given coding block of a frame to be encoded into a vector quantized signal,

   wherein
   the entropy coding unit (205) is configured to entropy code, for said given coding block, the scalar quantized signal obtained by the scalar quantization unit (102) and the vector quantized signal obtained by the vector quantization unit (210) so as to obtain a respective scalar quantized output signal and vector quantized output signal, and to select as encoded signal of the given coding block the scalar quantized output signal or the vector quantized output signal depending on their respective cost function.

8. Encoder according to any of the preceding claims,
   the encoder comprising:

   - a codebook generation unit (104) configured to train the codebook on the basis of the obtained training signals.

9. Decoder (800) for obtaining training signals configured to train a codebook for inverse vector quantization of a bit stream of an encoded video sequence of subsequent frames, each frame being subdivided into coding blocks,

   the decoder comprising:

   - an obtaining unit configured to obtain, from the bit stream, a threshold value ($t_{VQ}$) and an encoded signal for each coding block of one or several training frames of the video sequence,
   - an entropy decoding unit (805) configured to entropy decode, for each coding block of each training frame, the encoded signal into a scalar quantized signal, wherein the encoded signal is an entropy encoded scalar quantized signal,
   - an inverse scalar quantization unit (806) configured to obtain, for each coding block of each training frame, a reconstructed prediction error ($e'_k$) from the scalar quantized signal,
   - a data selection unit (803) configured to select, from among the training frame(s) of the video sequence, one or several coding blocks of the training frame(s) depending on a cost function of their respective encoded signal, and to obtain, for each selected coding block, a training signal being the reconstructed prediction error ($e'_k$) of the selected coding block, and configured to train the codebook for inverse vector quantization of the bit stream,

   wherein the cost function is a number of bits per pixel of the encoded signal; and
   the data selection unit (803) is configured to select the coding blocks for which the cost function of the respective encoded signal is above the threshold value ($t_{VQ}$).

10. Method for obtaining training signals configured to train a codebook for vector quantization of a video sequence of subsequent frames, each frame being subdivided into coding blocks, and for encoding the video sequence in encoded signals,
the method comprising:

- obtaining, for each coding block of one or more training frames of the video sequence, a scalar quantized signal from a prediction error ($e_k$),
- entropy coding, for each coding block of each training frame of the video sequence, the scalar quantized signal into an output signal,
- selecting, from among the training frames of the video sequence, one or several coding blocks of the training frames depending on a cost function of their respective output signal, wherein the cost function of the output signal is a number of bits per pixel of the output signal or a rate distortion function of the output signal, and wherein the coding blocks are selected for which the respective output signal has a cost function above a threshold ($t_{VQ}$),
- obtaining, for each selected coding block, a training signal, wherein the training signal is either the prediction error ($e_k$) or a reconstructed prediction error ($e'_k$) of the selected coding block,
- training the codebook for vector quantization of the video sequence, and
- adding the threshold ($t_{VQ}$) in the encoded signals as side information.

11. Method for obtaining training signals configured to train a codebook for inverse vector quantization of a bit stream of an encoded video sequence of subsequent frames, each frame being subdivided into coding blocks, the method comprising:

- obtaining, from the bit stream, a threshold value ($t_{VQ}$) and an encoded signal for each coding block of one or several training frames of the video sequence,
- entropy decoding, for each coding block of each training frame, the encoded signal into a scalar quantized signal, wherein the encoded signal is an entropy encoded scalar quantized signal,
- obtaining, for each coding block of each training frame, a reconstructed prediction error ($e'_k$) from the scalar quantized signal,
- selecting, from among the training frame(s) of the video sequence, one or several coding blocks of the training frame(s) depending on a cost function of their respective encoded signal, wherein the cost function is a number of bits per pixel of the encoded signal, and wherein the coding blocks are selected for which the cost function of the respective encoded signal is above the threshold value ($t_{VQ}$),
- obtaining, for each selected coding block, a training signal being the reconstructed prediction error ($e'_k$) of the selected coding block,
- training the codebook for inverse vector quantization of the bit stream.

**Patentansprüche**

1. Codierer zum Erlangen von Trainingssignalen, der zum Trainieren eines Codebuchs für die Vektorquantisierung einer Videosequenz aufeinanderfolgender Einzelbilder konfiguriert ist, wobei jedes Einzelbild in Codierblöcke unterteilt ist, sowie zum Codieren der Videosequenz in codierte Signale konfiguriert ist, wobei der Codierer Folgendes umfasst:

eine Skalarquantisierungseinheit (102), die dazu konfiguriert ist, für jeden Codierblock eines oder mehrerer Trainingseinzelbilder der Videosequenz ein skalarquantisiertes Signal aus einem Vorhersagefehler ($e_k$) zu erlangen,
eine Entropie-Codiereinheit (105), die dazu konfiguriert ist, für jeden Codierblock jedes Trainingseinzelbilds der Videosequenz das skalarquantisierte Signal in ein Ausgangssignal zu Entropie-codieren,
eine Datenauswahleinheit (103), die dazu konfiguriert ist, aus den Trainingseinzelbildern der Videosequenz einen oder mehrere Codierblöcke der Trainingseinzelbilder abhängig von einer Kostenfunktion ihres jeweiligen Ausgangssignals auszuwählen und für jeden ausgewählten Codierblock ein Trainingssignal zu erlangen, wobei das Trainingssignal entweder der Vorhersagefehler ($e_k$) oder ein rekonstruierter Vorhersagefehler ($e'_k$) des ausgewählten Codierblocks ist, und dazu konfiguriert ist, das Codebuch für die Vektorquantisierung der Videosequenz zu trainieren,
wobei die Kostenfunktion des Ausgangssignals eine Anzahl von Bits pro Pixel des Ausgangssignals oder eine Ratenverzerrungsfunktion des Ausgangssignals ist; und
die Datenauswahleinheit (103) dazu konfiguriert ist, die Codierblöcke auszuwählen, für die das jeweilige Ausgangssignal eine Kostenfunktion oberhalb eines Schwellenwerts ($t_{VQ}$) aufweist, und

wobei der Codierer dazu konfiguriert ist, den Schwellenwert (tvo) in den codierten Signalen als Nebeninformationen hinzuzufügen.

2. Codierer gemäß Anspruch 1,
wobei das Trainingssignal der Vorhersagefehler ($e_k$) des ausgewählten Codierblocks ist.

3. Codierer gemäß Anspruch 1,
wobei der Codierer Folgendes umfasst:

   eine inverse Skalarquantisierungseinheit (606), die dazu konfiguriert ist, für jeden Codierblock jedes Trainingseinzelbildes der Videosequenz den rekonstruierten Vorhersagefehler ($e'_k$) aus dem skalarquantisierten Signal zu erlangen,
   wobei das Trainingssignal der rekonstruierte Vorhersagefehler ($e'_k$) des ausgewählten Codierblocks ist.

4. Codierer gemäß einem der vorhergehenden Ansprüche,
ferner umfassend:

   eine Intra-Vorhersageeinheit (108), die dazu konfiguriert ist, ein vorhergesagtes Signal (S"k) für ein ursprüngliches Signal ($S_k$) als ein intra-vorhergesagtes Signal gemäß einem Intra-Vorhersagemodus zu erzeugen, wobei ein Intra-Vorhersagefehler ($e_k$) eine Differenz zwischen dem ursprünglichen Signal ($S_k$) und dem intra-vorhergesagten Signal (S"k) ist, und
   eine Inter-Vorhersageeinheit (109), die dazu konfiguriert ist, das vorhergesagte Signal (S"k) für das ursprüngliche Signal als ein inter-vorhergesagtes Signal gemäß einem Inter-Vorhersagemodus zu erzeugen, wobei ein Inter-Vorhersagefehler ($e_k$) eine Differenz zwischen dem ursprünglichen Signal ($S_k$) und dem inter-vorhergesagten Signal (S"k) ist,
   wobei die Datenauswahleinheit (103) dazu konfiguriert ist, für jeden ausgewählten Codierblock ein erstes Trainingssignal, das aus dem Intra-Vorhersagefehler des ausgewählten Codierblocks abgeleitet ist, und ein zweites Trainingssignal, das aus dem Inter-Vorhersagefehler des ausgewählten Codierblocks abgeleitet ist, zu erlangen,
   wobei das erste und zweite Trainingssignal dazu konfiguriert sind, ein erstes und ein zweites Codebuch für die Vektorquantisierung der Videosequenz gemäß einem Intra-Vorhersagemodus bzw. einem Inter-Vorhersagemodus zu trainieren.

5. Codierer gemäß einem der vorhergehenden Ansprüche,
wobei der Codierer Folgendes umfasst:
einen Szenenwechseldetektor, der dazu konfiguriert ist, einen Szenenwechsel in der Videosequenz zu erkennen, wobei die Datenauswahleinheit (103) dazu konfiguriert ist, nach einem erkannten Szenenwechsel szenenadaptive Trainingssignale zu erlangen.

6. Codierer gemäß Anspruch 5, wenn abhängig von Anspruch 4, wobei das Trainingseinzelbild das erste Einzelbild nach einem erkannten Szenenwechsel ist, das sowohl im Intra-Vorhersagemodus als auch im Inter-Vorhersagemodus codiert ist.

7. Codierer gemäß einem der vorhergehenden Ansprüche zum Codieren eines Originalsignals ($S_k$) in ein codiertes Signal, wobei der Codierer Folgendes umfasst:

   eine Vektorquantisierungseinheit (210), die dazu konfiguriert ist, gemäß dem trainierten Codebuch den Vorhersagefehler ($e_k$) eines gegebenen Codierblocks eines Einzelbildes, das in ein vektorquantisiertes Signal codiert werden soll, zu vektorquantisieren,
   wobei
   die Entropie-Codiereinheit (205) dazu konfiguriert ist, für diesen gegebenen Codierblock das von der Skalarquantisierungseinheit (102) erlangte skalarquantisierte Signal und das von der Vektorquantisierungseinheit (210) erlangte vektorquantisierte Signal zu Entropie-codieren, um so ein jeweiliges skalarquantisiertes Ausgangssignal und ein vektorquantisiertes Ausgangssignal zu erlangen, und das skalarquantisierte Ausgangssignal oder das vektorquantisierte Ausgangssignal abhängig von ihrer jeweiligen Kostenfunktion als codiertes Signal des gegebenen Codierblocks auszuwählen.

8. Codierer gemäß einem der vorhergehenden Ansprüche,
wobei der Codierer Folgendes umfasst:

eine Codebuch-Erzeugungseinheit (104), die dazu konfiguriert ist, das Codebuch auf Grundlage der erlangten Trainingssignale zu trainieren.

9. Decodierer (800) zum Erlangen von Trainingssignalen, der dazu konfiguriert ist, ein Codebuch für die inverse Vektorquantisierung eines Bitstroms einer codierten Videosequenz aufeinanderfolgender Einzelbilder zu trainieren, wobei jedes Einzelbild in Codierblöcke unterteilt ist,
wobei der Decodierer Folgendes umfasst:

eine Erlangungseinheit, die dazu konfiguriert ist, aus dem Bitstrom einen Schwellenwert ($t_{VQ}$) und ein codiertes Signal für jeden Codierblock eines oder mehrerer Trainingseinzelbilder der Videosequenz zu erlangen,
eine Entropie-Decodiereinheit (805), die dazu konfiguriert ist, für jeden Codierblock jedes Trainingseinzelbilds das codierte Signal in ein skalarquantisiertes Signal zu Entropie-decodieren, wobei das codierte Signal ein Entropie-codiertes skalarquantisiertes Signal ist,
eine inverse Skalarquantisierungseinheit (806), die dazu konfiguriert ist, für jeden Codierblock jedes Trainingseinzelbildes einen rekonstruierten Vorhersagefehler ($e'_k$) aus dem skalarquantisierten Signal zu erlangen,
eine Datenauswahleinheit (803), die dazu konfiguriert ist, aus dem/den Trainingseinzelbild(ern) der Videosequenz einen oder mehrere Codierblöcke des/der Trainingseinzelbilds/-bilder abhängig von einer Kostenfunktion ihres jeweiligen codierten Signals auszuwählen und für jeden ausgewählten Codierblock ein Trainingssignal zu erlangen, das der rekonstruierte Vorhersagefehler ($e'_k$) des ausgewählten Codierblocks ist, und dazu konfiguriert ist, das Codebuch für die inverse Vektorquantisierung des Bitstroms zu trainieren,
wobei die Kostenfunktion eine Anzahl von Bits pro Pixel des codierten Signals ist; und
die Datenauswahleinheit (803) dazu konfiguriert ist, die Codierblöcke auszuwählen, für die die Kostenfunktion des jeweiligen codierten Signals über dem Schwellenwert ($t_{VQ}$) liegt.

10. Verfahren zum Erlangen von Trainingssignalen, das zum Trainieren eines Codebuchs für die Vektorquantisierung einer Videosequenz aufeinanderfolgender Einzelbilder konfiguriert ist, wobei jedes Einzelbild in Codierblöcke unterteilt ist, sowie zum Codieren der Videosequenz in codierte Signale konfiguriert ist,
wobei das Verfahren Folgendes umfasst:

Erlangen eines skalarquantisierten Signals aus einem Vorhersagefehler ($e_k$) für jeden Codierblock eines oder mehrerer Trainingseinzelbilder der Videosequenz,
Entropie-Codieren des skalarquantisierten Signals in ein Ausgangssignal für jeden Codierblock jedes Trainingseinzelbilds der Videosequenz,
Auswählen eines oder mehrerer Codierblöcke der Trainingseinzelbilder aus den Trainingseinzelbildern der Videosequenz abhängig von einer Kostenfunktion ihres jeweiligen Ausgangssignals, wobei die Kostenfunktion des Ausgangssignals eine Anzahl von Bits pro Pixel oder eine Ratenverzerrungsfunktion des Ausgangssignals ist und wobei die Codierblöcke ausgewählt werden, für die die Kostenfunktion des jeweiligen Ausgangssignals über dem Schwellenwert ($t_{VQ}$) liegt, Erlangen eines Trainingssignals für jeden ausgewählten Codierblock, wobei das Trainingssignal entweder der Vorhersagefehler ($e_k$) oder ein rekonstruierter Vorhersagefehler ($e'_k$) des ausgewählten Codierblocks ist,
Trainieren des Codebuchs für die Vektorquantisierung der Videosequenz und
Hinzufügen des Schwellenwerts ($t_{VQ}$) in den codierten Signalen als Nebeninformation.

11. Verfahren zum Erlangen von Trainingssignalen, das dazu konfiguriert ist, ein Codebuch für die inverse Vektorquantisierung eines Bitstroms einer codierten Videosequenz aufeinanderfolgender Einzelbilder zu trainieren, wobei jedes Einzelbild in Codierblöcke unterteilt ist,
wobei das Verfahren Folgendes umfasst:

Erlangen eines Schwellenwerts ($t_{VQ}$) und eines codierten Signals für jeden Codierblock eines oder mehrerer Trainingseinzelbilder der Videosequenz aus dem Bitstrom,
Entropie-Decodieren des codierten Signals in ein skalarquantisiertes Signal für jeden Codierblock jedes Trainingseinzelbilds, wobei das codierte Signal ein Entropie-codiertes skalarquantisiertes Signal ist,
Erlangen eines rekonstruierten Vorhersagefehlers ($e'_k$) aus dem skalarquantisierten Signal für jeden Codierblock jedes Trainingseinzelbildes,
Auswählen eines oder mehrerer Codierblöcke des/der Trainingseinzelbilds/-bilder aus dem/den Trainingseinzelbild(ern) der Videosequenz abhängig von einer Kostenfunktion ihres jeweiligen codierten Signals, wobei die Kostenfunktion eine Anzahl von Bits pro Pixel des codierten Signals ist und wobei die Codierblöcke ausgewählt werden, für die die Kostenfunktion des jeweiligen codierten Signals über dem Schwellenwert ($t_{VQ}$) liegt,

Erlangen eines Trainingssignals, das der rekonstruierte Vorhersagefehler (e'$_k$) des ausgewählten Codierblocks ist, für jeden ausgewählten Codierblock,

Trainieren des Codebuchs für die inverse Vektorquantisierung des Bitstroms.

## Revendications

1. Codeur pour obtenir des signaux d'apprentissage, configuré pour entraîner un livre de codes en vue de la quantification vectorielle d'une séquence vidéo de trames ultérieures, chaque trame étant subdivisée en blocs de codage, et destiné à coder la séquence vidéo en signaux codés,

   le codeur comprenant :

   une unité de quantification scalaire (102) configurée pour obtenir, pour chaque bloc de codage d'une ou plusieurs trames d'apprentissage de la séquence vidéo, un signal quantifié scalaire à partir d'une erreur de prédiction (e$_k$),
   une unité de codage entropique (105) configurée pour le codage entropique, pour chaque bloc de codage de chaque trame d'apprentissage de la séquence vidéo, du signal quantifié scalaire en un signal de sortie,
   une unité de sélection de données (103) configurée pour sélectionner, parmi les trames d'apprentissage de la séquence vidéo, un ou plusieurs blocs de codage des trames d'apprentissage selon une fonction de coût de leur signal de sortie respectif, et pour obtenir, pour chaque bloc de codage sélectionné, un signal d'apprentissage, dans lequel le signal d'apprentissage est soit l'erreur de prédiction (e$_k$) soit une erreur de prédiction reconstruite (e'$_k$) du bloc de codage sélectionné, et configurée pour entraîner le livre de codes en vue de la quantification vectorielle de la séquence vidéo,
   dans laquelle la fonction de coût du signal de sortie est un nombre de bits par pixel du signal de sortie ou une fonction de distorsion de débit du signal de sortie ; et
   l'unité de sélection de données (103) est configurée pour sélectionner les blocs de codage pour lesquels le signal de sortie respectif a une fonction de coût supérieure à un seuil (t$_{VQ}$), et
   dans laquelle le codeur est configuré pour ajouter le seuil (tvo) dans les signaux codés en tant qu'informations secondaires.

2. Codeur selon la revendication 1,
   dans lequel le signal d'apprentissage est l'erreur de prédiction (e$_k$) du bloc de codage sélectionné.

3. Codeur selon la revendication 1,
   le codeur comprenant :

   une unité de quantification scalaire inverse (606) configurée pour obtenir, pour chaque bloc de codage de chaque trame d'apprentissage de la séquence vidéo, l'erreur de prédiction reconstruite (e'$_k$) à partir du signal quantifié scalaire,
   dans lequel le signal d'apprentissage est l'erreur de prédiction reconstruite (e'$_k$) du bloc de codage sélectionné.

4. Codeur selon l'une quelconque des revendications précédentes, comprenant également :

   une unité de prédiction intra (108) configurée pour générer un signal prédit (S"$_k$) pour un signal original (S$_k$) en tant que signal prédit intra selon un mode de prédiction intra, une erreur de prédiction intra (e$_k$) étant une différence entre le signal original (S$_k$) et le signal prédit intra (S"$_k$), et
   une unité de prédiction inter (109) configurée pour générer le signal prédit (S"$_k$) pour le signal original en tant que signal prédit inter selon un mode de prédiction inter, une erreur de prédiction inter (e$_k$) étant une différence entre le signal original (S$_k$) et le signal prédit inter (S"$_k$),
   dans lequel l'unité de sélection de données (103) est configurée pour obtenir, pour chaque bloc de codage sélectionné, un premier signal d'apprentissage dérivé de l'erreur de prédiction intra du bloc de codage sélectionné et un deuxième signal d'apprentissage dérivé de l'erreur de prédiction inter du bloc de codage sélectionné, lesdits premier et deuxième signaux d'apprentissage étant configurés pour entraîner un premier et un deuxième livre de codes en vue de la quantification vectorielle de la séquence vidéo selon, respectivement, un mode de prédiction intra et un mode de prédiction inter.

5. Codeur selon l'une quelconque des revendications précédentes, le codeur comprenant :
   un détecteur de changement de scène configuré pour détecter un changement de scène dans la séquence vidéo,
   dans lequel l'unité de sélection de données (103) est configurée pour obtenir des signaux d'apprentissage capables de s'adapter à la scène lorsqu'un changement de scène est détecté.

6. Codeur selon la revendication 5, lorsqu'elle dépend de la revendication 4,
dans lequel la trame d'apprentissage est la première trame après la détection d'un changement de scène, qui est codée à la fois en mode de prédiction intra et en mode de prédiction inter.

7. Codeur selon l'une quelconque des revendications précédentes pour coder un signal original ($S_k$) en un signal codé, le codeur comprenant :

   une unité de quantification vectorielle (210) configurée pour quantifier vectoriellement, selon le livre de codes entraîné, l'erreur de prédiction ($e_k$) d'un bloc de codage donné d'une trame à coder en un signal quantifié vectoriel, dans lequel
   l'unité de codage entropique (205) est configurée pour le codage entropique, pour ledit bloc de codage donné, le signal quantifié scalaire obtenu par l'unité de quantification scalaire (102) et le signal quantifié vectoriel obtenu par l'unité de quantification vectorielle (210) de manière à obtenir un signal de sortie quantifié scalaire et un signal de sortie quantifié vectoriel respectifs, et à sélectionner comme signal codé du bloc de codage donné le signal de sortie scalaire quantifié ou le signal de sortie vectoriel quantifié selon leur fonction de coût respective.

8. Codeur selon l'une quelconque des revendications précédentes, le codeur comprenant :
   une unité de génération de livre de codes (104) configurée pour entraîner le livre de codes sur la base des signaux d'apprentissage obtenus.

9. Décodeur (800) pour obtenir des signaux d'apprentissage, configuré pour entraîner un livre de codes pour la quantification vectorielle inverse d'un flux binaire d'une séquence vidéo codée d'images suivantes, chaque image étant subdivisée en blocs de codage,
le décodeur comprenant :

   une unité d'obtention configurée pour obtenir, à partir du flux binaire, une valeur seuil (tvo) et un signal codé pour chaque bloc de codage d'une ou plusieurs trames d'apprentissage de la séquence vidéo,
   une unité de décodage entropique (805) configurée pour décoder de manière entropique, pour chaque bloc de codage de chaque trame d'apprentissage, le signal codé en un signal quantifié scalaire, dans lequel le signal codé est un signal quantifié scalaire codé de manière entropique,
   une unité de quantification scalaire inverse (806) configurée pour obtenir, pour chaque bloc de codage de chaque trame d'apprentissage, une erreur de prédiction reconstruite ($e'_k$) à partir du signal quantifié scalaire,
   une unité de sélection de données (803) configurée pour sélectionner, parmi le (s) trame(s) d'apprentissage de la séquence vidéo, un ou plusieurs blocs de codage du ou des trame(s) d'apprentissage selon une fonction de coût de leur signal codé respectif, et pour obtenir, pour chaque bloc de codage sélectionné, un signal d'apprentissage, celui-ci étant l'erreur de prédiction reconstruite ($e'k$) du bloc de codage sélectionné, et configuré pour entraîner le livre de codes pour la quantification vectorielle inverse du flux binaire,
   dans lequel la fonction de coût est un nombre de bits par pixel du signal codé ; et
   l'unité de sélection de données (803) est configurée pour sélectionner les blocs de codage pour lesquels la fonction de coût du signal codé respectif est supérieure à la valeur seuil (tvQ) .

10. Procédé pour obtenir des signaux d'apprentissage, configuré pour entraîner un livre de codes en vue de la quantification vectorielle d'une séquence vidéo de trames ultérieures, chaque trame étant subdivisée en blocs de codage, et destiné à coder la séquence vidéo en signaux codés,
le procédé comprenant :

   l'obtention, pour chaque bloc de codage d'une ou plusieurs trames d'apprentissage de la séquence vidéo, un signal quantifié scalaire à partir d'une erreur de prédiction ($e_k$),
   le codage entropique, pour chaque bloc de codage de chaque trame d'apprentissage de la séquence vidéo, du signal quantifié scalaire en un signal de sortie,
   la sélection, parmi les trames d'apprentissage de la séquence vidéo, d'un ou plusieurs blocs de codage des trames d'apprentissage selon une fonction de coût de leur signal de sortie respectif, dans lesquels la fonction de coût du signal de sortie est un nombre de bits par pixel du signal de sortie ou une fonction de distorsion de débit du signal de sortie, et dans lesquels les blocs de codage sont sélectionnés pour lesquels le signal de sortie respectif a une fonction de coût supérieure à un seuil (tvo),
   l'obtention, pour chaque bloc de codage sélectionné, d'un signal d'apprentissage, dans lequel le signal d'apprentissage est soit l'erreur de prédiction ($e_k$), soit une erreur de prédiction reconstruite ($e'_k$) du bloc de codage sélectionné,

l'entraînement du livre de codes pour la quantification vectorielle de la séquence vidéo, et

l'ajout du seuil ($t_{VQ}$) dans les signaux codés en tant qu'informations secondaires.

11. Procédé pour obtenir des signaux d'apprentissage, configuré pour entraîner un livre de codes pour la quantification vectorielle inverse d'un flux binaire d'une séquence vidéo codée de trames ultérieures, chaque trame étant subdivisée en blocs de codage,

le procédé comprenant :

l'obtention, à partir du flux binaire, d'une valeur seuil ($t_{VQ}$) et d'un signal codé pour chaque bloc de codage d'une ou plusieurs trames d'apprentissage de la séquence vidéo,

le décodage entropique, pour chaque bloc de codage de chaque trame d'apprentissage, du signal codé en un signal quantifié scalaire, dans lequel le signal codé est un signal quantifié scalaire codé de manière entropique,

l'obtention, pour chaque bloc de codage de chaque trame d'apprentissage, d'une erreur de prédiction reconstruite ($e'_k$) à partir du signal quantifié scalaire,

la sélection, parmi la ou les trame(s) d'apprentissage de la séquence vidéo, d'un ou plusieurs blocs de codage de la ou des trame(s) d'apprentissage selon une fonction de coût de leur signal codé respectif, dans lesquels la fonction de coût est un nombre de bits par pixel du signal codé, et dans lesquels sont sélectionnés les blocs de codage pour lesquels la fonction de coût du signal codé respectif est supérieure à la valeur seuil ($t_{VQ}$),

l'obtention, pour chaque bloc de codage sélectionné, d'un signal d'apprentissage étant l'erreur de prédiction reconstruite ($e'_k$) du bloc de codage sélectionné,

l'entraînement du livre de codes pour une quantification vectorielle inverse du flux binaire.

Fig. 1

Fig. 2

**Fig. 3**

400

405

| Entropy Decoding | ← Bit stream

406 — | Inv. Scalar Quantization & Inv. Transform |   | Inv. Vector Quantization | — 411

407

$e'_k$

$S''_k$

408

| Intra Prediction |   $S'_k$

| Inter Prediction |

409

**Fig. 4**

**Fig. 5**

Bits per pixel

603

$t_{VQ}$

Data
Selection

Codebook
Generation

604

601

$S_k$

Transform &
Scalar
Quantization

Entropy
Coding

Output

602

605

$e_k$

Inv. Scalar
Quantization &
Inv. Transform

606

$e'_k$

$S''_k$

608

607

Intra
Prediction

$S'_k$

600

Inter
Prediction

609

**Fig. 6**

$t_{VQ}$

Data
Selection

Bits per pixel

Codebook
Generation

Entropy
Coding

Output

$S_k$

Vector
Quantization

$e_k$

Transform &
Scalar
Quantization

Inv. Scalar
Quantization &
Inv. Transform

Inv. Vector
Quantization

700

$S''_k$

$e'_k$

Intra
Prediction

$S'_k$

Inter
Prediction

**Fig. 7**

**Fig. 8**

902

900

901

Retrieving codebook from cloud

Cloud (Codebook training, storing)

Retrieving codebook from Cloud

903

Scene 1   Scene 2

Data Selection

Bits per pixel

Entropy Coding

Entropy Decoding

VQ

Input frames   $S_k$

$e_k$

Vector Quantization

Transform & Scalar Quantization

Inv. Scalar Quantization & Inv. Transform

Inv. Vector Quantization

Internet

Inv. Scalar Quantization & Inv. Transform

Inv. Vector Quantization

$S''_k$

Intra Prediction   $S'_k$

Inter Prediction

$S''_k$

Intra Prediction   $S'_k$   Output frames

Inter Prediction

**Fig. 9**

27

Fig. 10

**Fig. 11**

**Fig. 12**

Reduction of bits per frame, kimono (QP 32), LD-P

**Fig. 13**

## REFERENCES CITED IN THE DESCRIPTION

**Patent documents cited in the description**

- US 20140355672 A1
- US 5859932 A
- US 5457495 A

**Non-patent literature cited in the description**

- **A. GERSHO ; R. M. GRAY.** Vector quantization and signal compression. Kluwer Adademic Publishers, April 1992
- **M. WAGNER ; D. SAUPE.** Video coding with quad-trees and adaptive vector quantization. *10th European in Signal Processing Conference,* 2000
- **B. H. HUANG ; F. HENRY ; C. GUILLEMOT ; P. SA-LEMBIER.** Mode Dependent Vector Quantization with a rate-distortion optimized codebook for residue coding in video compression. *IEEE International Conference on Acoustics, Speech and Signal Processing (ICASSP),* April 2015
- **J. M. VALIN ; T. B. TIMOTHY.** Perceptual vector quantization for video coding. *Proc. SPIE 9410-09,* September 2015
- **FISCHER, T.R.** A pyramid vector quantizer. *IEEE Trans. On Information Theory,* 1986, vol. 32, 568-586
- **M. NARROSCHKE.** Extending the prediction error coder of H.264/AVC by a vector quantizer. *Proc. SPIE 5960, Visual Communications and Image Processing,* 2005
- **BIHONG HUANG.** Second-order prediction and residue vector quantization for video compression. *Thèse pour le grade de docteur,* 08 July 2015
- **D. WANGET.** Codebook adaptation algorithm for a scene adaptive video coder. *1995 IEEE INTERNATIONAL CONFERENCE ON ACOUSTICS, SPEECH AND SIGNAL PROCESSING (ICASSP,* 01 January 1995, vol. 4, 2591-2594
- **Y. LINDE.** An algorithm for vector quantizer design. *IEEE Transactions on Communications,* January 1980
- **ASIF, A ; MOURA, J.M.F.** Image codec by noncausal prediction, residual mean removal, and cascaded VQ. *IEEE Transactions on Circuits and Systems for Video Technology,* February 1996, vol. 6 (1), 42-55
- **M. BUDAGAVI.** Core transform design in the high efficiency video coding (HEVC) standard. *IEEE Journal of Selected Topics in Signal Processing,* December 2013, vol. 7 (6), 1029-1041